# EUROPEAN PATENT APPLICATION

(11) **EP 2 428 867 A1**
(43) Date of publication of application: **14.03.2012**
(21) Application number: 10175977.7
(22) Date of filing: 09.09.2010
(51) Int. Cl.: G06F 1/32, G09G 5/00

(54) **System and method for controlling a display according display characteristics**

(71) Applicant: Research In Motion Limited, Waterloo, ON N2L 3W8 (CA)
(72) Inventor: Hymel, James Allen, Waterloo Ontario N2L 5Z5 (CA)
(74) Representative: MERH-IP Matias Erny Reichl Hoffmann

(57) **Abstract**

The present specification relates to a system and method for controlling a display according to display characteristics. In one aspect, an electronic device is provided with an active matrix organic light emitting diode display. A method is provided whereby at least a portion of the content to be generated on the display is modified so as to reduce the amount of power consumption by the display.

## Description

### FIELD

The present specification relates generally to computing devices and more specifically relates to a system and method for controlling a display according to display characteristics.

### BACKGROUND

Mobile electronic devices continue apace to provide greater functionality. Advances in display technology are one area of constant improvement. Light Crystal Display (LCD) display technology is the incumbent technology, but Organic Light Emitting Diode (OLED) display technologies have a promising future.

### SUMMARY

An aspect of this specification provides a method comprising: detecting presence of an active-matrix organic light-emitting diode display in a handheld mobile device; receiving content for generation on the display; determining a portion of the content having a first power drain characteristic; generating modified content by modifying the portion into a format that has a second power drain characteristic; the second power drain characteristic causing less drain on a power supply than the first power drain characteristic; and controlling the display to generate the modified content.

The first power drain characteristic can result from the portion comprising a light color.

The second power drain characteristic can result from the portion comprising a color that is darker than the light color.

Generating the modified content can comprise deleting the portion of the content.

The method can further comprise waiting a predetermined time period before generating the modified content. The predetermined time period can be based on a unique tag embedded into the content that indicates a duration of the predetermined time period and the portion associated with the duration of the predefined time period.

The content can be in hypertext markup language format (HTML).

The first power drain characteristic can be identified by a unique tag embedded into the content.

The generating of the modified content can be based on a determination of an importance of various portions of the content in relation to other portions of the content. The importance can be determined based on unique tags embedded into the content respective to each of the various portions of the content.

The content can comprise one of a graphic image, text, a photograph, or a video.

The content can be stored in a memory of said handheld mobile device.

The method can further comprise determining a portion of the content that requires power above a threshold amount of power; and modifying the portion of the graphic image that requires power above the threshold amount of power to require power below the threshold amount of power.

Another aspect of this specification provides an electronic device comprising: a display; a processor connected to said display and configured to control said display; storage connected to said processor and configured to store content; said processor configured to according to any of the foregoing methods.

Another aspect of this specification provides a server having a processor configured to perform one or more of the detecting, determining and modifying according to any of the foregoing methods, and in communication with an electronic device configured to perform a remainder of the method. A combined system of server and electronic device is also contemplated.

### BRIEF DESCRIPTION OF THE DRAWINGS

Figure 1 is a schematic representation of a front view of a portable electronic device.

Figure 2 is a schematic representation of a rear view of a portable electronic device.

Figure 3 is a block diagram of the electronic components of the device shown in Figures 1 and 2.

Figure 4 shows a system comprising the device of Figure 1 connected to a network and server.

Figure 5 shows an example of content that can be stored on the server of Figure 4, as such content would be displayed on a traditional web browser.

Figure 6 shows a flowchart depicting a method of controlling a display according to display characteristics.

Figure 7 shows exemplary performance of one of the blocks of the method of Figure 6.

Figure 8 shows an example of a modified version of the content of Figure 5, which has been modified according the method of Figure 6.

Figure 9 shows the modified version of content from Figure 8 being generated on the display of the device from Figure 1.

Figure 10 shows another method for controlling a display according to display characteristics.

Figure 11 shows blocks which provide an example of one possible way of performing one of the blocks from the method of Figure 10.

Figure 12 shows another method for controlling a display according to display characteristics.

Figure 13 shows an example of a modified version of the content of Figure 8, which has been modified according the method of Figure 12.

Figure 14 shows a modified version of the system of Figure 4.

Figure 15 shows another modified version of the system of Figure 4.

Figure 16 shows another modified version of the system of Figure 4.

Figure 17 shows another modified version of the system of Figure 4.

Figure 18 shows another example of unmodified content.

Figure 19 shows an example of modified content generated from the unmodified content of Figure 18.

Figure 20 shows another example of unmodified content and corresponding modified content.

Figure 21 shows another example of unmodified content and corresponding modified content.

Figure 22 shows another example of unmodified content and corresponding modified content.

### DETAILED DESCRIPTION

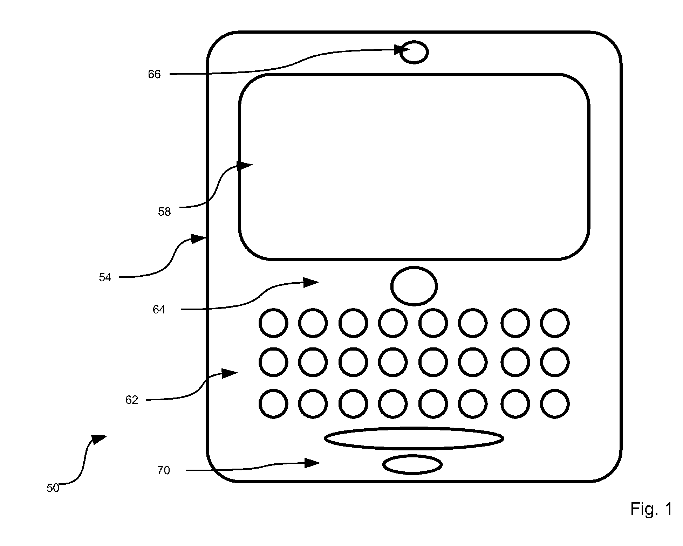

Referring now to Figure 1, shows a schematic representation of a non-limiting example of a portable electronic device 50 which is configured for device setting management via a plurality of interfaces, as discussed in greater detail below. It is to be understood that portable electronic device 50 is purely exemplary, and it will be apparent to those skilled in the art that a variety of different portable electronic device structures are contemplated. Indeed variations on portable electronic device 50 can include, without limitation, a cellular telephone, a portable email paging device, a camera, a portable music player, a portable video player, and a portable video game player. Other contemplated variations include devices which are not necessarily portable, such as desktop computers.

Referring to Figure 1, device 50 comprises a chassis 54 that supports a display 58. Display 58 can comprise one or more light emitters such as an array of liquid crystals, plasma cells, or organic light emitting diodes (OLED). Other types of light emitters are contemplated. In a present non-limiting implementation, as will be discussed further below, display 58 comprises an active matrix of OLEDs (AMOLED). Chassis 54 also supports a keyboard 62. It is to be understood that this specification is not limited to any particular structure, spacing, pitch or shape of keyboard 62, and the depiction in Figure 1 is purely exemplary. For example, full or reduced "QWERTY" keyboards are contemplated. Other types of keyboards are contemplated. Device 50 also comprises a pointing device 64 which can be implemented as a touch-pad, joystick, trackball, track-wheel, or as a touch sensitive membrane on display 58. Device 50 also comprises a speaker 66 for generating audio output, and a microphone 68 for receiving audio input.

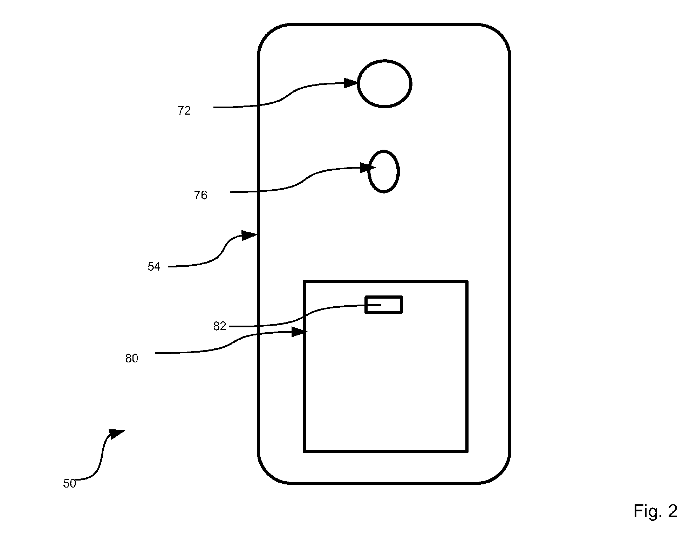

Referring to Figure 2, a rear view of device 50 is shown. In Figure 2, device 50 is also shown as comprising a flash 72 and an optical capture unit 76. It is to be understood that the term "optical" as used in relation to optical capture unit 76 is not directed to a lens structure or the like, but rather to refer to an array of charge couple devices (CCD) (or a functionally equivalent transducer structure) that is configured, in association with a lens structure, to receive an image in the form of electro-magnetic energy substantially within the visible spectrum, and to convert that energy into an electronic signal which can be further processed. Typically, the electronic signal is digitized for storage. The stored digitized image can be further processed and can be generated on display 58. Optical capture unit 76 that will be discussed in greater detail below. Flash 72 can activate to provide additional lighting to assist the capture of energy by optical capture 76. In general, it will now be understood that optical capture unit 76 can, if desired, be implemented, or based on, a digital camera function as commonly incorporated into portable electronic devices. A battery compartment cover 80 is also shown in Figure 2, with a tab 82 that can be manipulated to unlock cover 80 from chassis 54 and so that cover 80 can be detached from chassis 54.

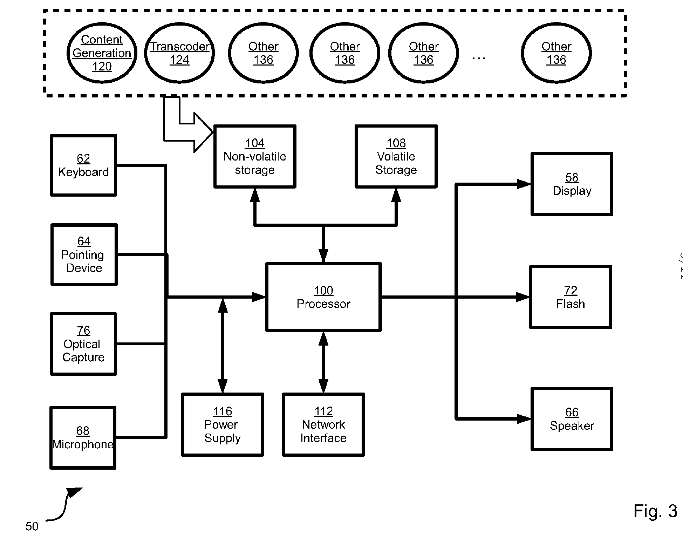

Figure 3 shows a schematic block diagram of the electronic components of device 50. It should be emphasized that the structure in Figure 3 is purely exemplary. Device 50 includes a plurality of input devices which in a present implementation includes keyboard 62, pointing device 64, and microphone 68, in addition to optical capture unit 76. Other input devices are contemplated. Input from keyboard 62, pointing device 64 and microphone 68 and optical capture unit 76 is received at processor 100. Processor 100 (which can be implemented as a plurality of single core or multi-core processors) can be configured to execute different programming instructions that can be responsive to the input received via input devices. To fulfill its programming functions, processor 100 is also configured to communicate with a non-volatile storage unit 104 (e.g. Erase Electronic Programmable Read Only Memory ("EEPROM"), Flash Memory) and a volatile storage unit 108 (e.g. random access memory ("RAM")). Programming instructions that implement the functional teachings of device 50 as described herein are typically maintained, persistently, in non-volatile storage unit 104 and used by processor 100 which makes appropriate utilization of volatile storage 108 during the execution of such programming instructions.

Processor 100 in turn is also configured to control display 58, speaker 66 and flash 72, also in accordance with different programming instructions and optionally responsive to different input receive from the input devices.

Processor 100 also connects to a network interface 112, which can be implemented in a present implementation as a radio configured to communicate over a wireless link, although in variants device 50 can also include a network interface for communicating over a wired link. Network interface 112 can thus be generalized as a further input/output device that can be utilized by processor 100 to fulfill various programming instructions. It will be understood that interface 112 is configured to correspond with the network architecture that defines such a link. Present, commonly employed network architectures for such a link include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers (IEEE) standard 802.11 (Wifi), Bluetooth™ or any of their variants or successors. It is also contemplated each network interface 112 can include multiple radios to accommodate the different protocols that may be used to implement different types of links. In the specific, non-limiting example, interface 112 is configured to provide 3G, Wifi and Bluetooth™ links.

Device 50 also comprises at least one power supply 116 such as a battery that connects to a bus that interconnects the various components of device 50 and supplies electrical energy to those components. For convenience, power supply 116 is only shown as connecting to the bus that connects processor 100 to the input devices, but it is to be understood that power supply 116 connects to all the busses of device 50 that are needed to supply power to each component of device 50.

As will become apparent further below, device 50 can be implemented with different configurations than described, omitting certain input devices or including extra input devices, and likewise omitting certain output devices or including extra input devices.

In a present implementation, device 54 is also configured to maintain, within non-volatile storage 104, a content generation application 120, a transcoder 124, and, typically, a plurality of other applications 136.

Content generation application 120 can be any application that, when executed by processor 100, configures processor 100 to control display 58 so that content is generated on display 58. In general, device 54 is configured to display content that is locally stored on device 54 or content available via network interface 112. Display 58, like other components in device 54, draws power from power supply 116 as part of its regular operation.

Transcoder 124 is an application that is configured to intercept content destined for browser application 120 and, according to certain criteria, modify that content prior to forwarding that content to browser application 120 for generation on display 58. Transcoder application 124 can be integrated within content generation application 120, or transcoder application 124 can be a stand-alone application. Transcoder 124 will be discussed in greater detail below.

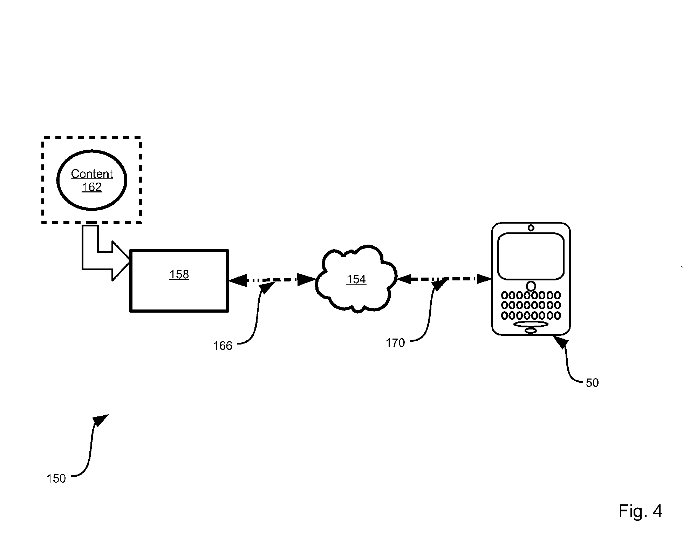

Referring now to Figure 4, a system is indicated generally at 150, which comprises a network 154 that interconnects device 50 and a content server 158 hosting content 162. A first link 166 connects server 158 to network 154, and a second link 170 connects network 154 to device 50.

The nature of network 154 and links 166 and 170 associated therewith are not particularly limited and are, in general, based on any combination of architectures that will support interactions between device 50 and server 158, including delivery of content 162 to device 50. Accordingly, links 166 and 170 between network 66 and the interconnected components are complementary to functional requirements of those components.

More specifically, link 170 between device 50 and network 154 may be based in a present implementation on core mobile network infrastructure (e.g. Global System for Mobile communications ("GSM"); Code Division Multiple Access ("CDMA"); CDMA 2000; 3G; Evolution-Data Optimized ("EV-DO"), Universal Mobile Telecommunications System ("UMTS"), High Speed Packet Access ("HSPA")) or on wireless local area network ("WLAN") infrastructures such as the Institute for Electrical and Electronic Engineers ("IEEE") 802.11 Standard (and its variants) or Bluetooth® or the like or hybrids thereof. Note that in an exemplary variation of system 150 it is contemplated that device 50 may be other types of client machines whereby link 170 is a wired connection. Link 166 may be based on a T1, T3, 03 or any other suitable wired or wireless connection between server 158 and network 154.

Server 158 may be based on any well-known server environment including a module that houses one or more central processing units, volatile memory (e.g. random access memory), persistent memory (e.g. hard disk devices) and network interfaces to allow server 158 to communicate over network 154. For example, server 158 may be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for servers 158 is contemplated.

In a present, non-limiting implementation, content generation application 120 is a browser that is configured to provide basic web-browsing functionality on device 54. Browser application 120 may be referred to as a mini-browser, in the sense that it is provided on client machine 54 which has a form factor that is "miniaturized", at least in relation to the form factor of a desk top computer. As will be explained further below, browser application 120 is configured to generate web-pages on the relatively small display of device 54, and generate those web-pages in a format that conveys substantially the same information, as if those web-pages had been generated on a traditional desktop browser such as Internet Explorer® (from Microsoft Corporation, One Microsoft Way, Redmond, Washington) or Firefox® (from Mozilla Foundation, 1981 Landings Drive, Building K, Mountain View, CA 94043-0801, USA.). Browser application 120 thus provides basic hyper text markup language (HTML) and other web-browsing capability, such as Java script. Also in this non-limiting implementation, server 158 is a web server and content 162 is a web page, network 154 comprises the Internet.

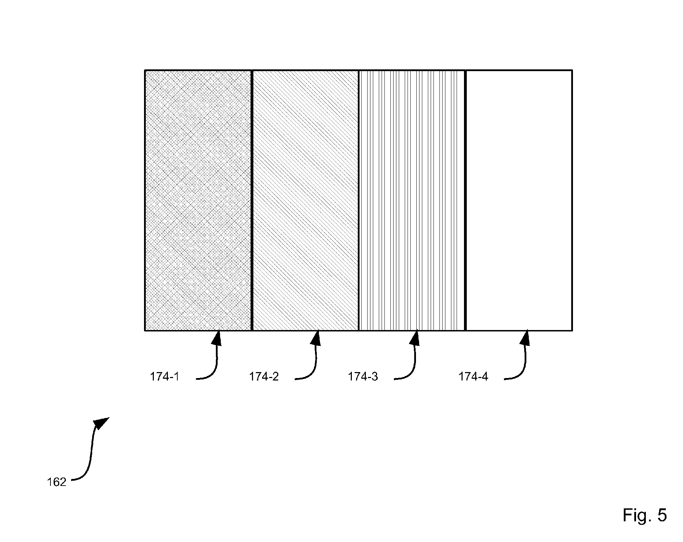

Referring now to Figure 5, a non-limiting example of content 162 is shown. For convenience, content 162 is shown as it would be generated on a traditional desktop browser according to its inherent programming and as stored on server 158. Content 162 comprises a plurality of elements 174-1, 174-2, 174-3, 174-4. (Collectively referred to as elements 174 and generically as element 174. This nomenclature is used elsewhere herein). In the example of Figure 5, only four elements 174 are shown, with each element being a vertical bar each having a unique colour and brightness. It is to be understood that any number and arrangement of elements 174 can be incorporated into content 162 to cause processor 100 to control display 58 to generate content 162 thereon. Without limiting the generality of the foregoing, it is contemplated that content 162 can include, for example text, images, video or any combination of them. Table I shows a non-limiting example of colours and brightness levels for each element 174.

**Table I**

| Colour and Brightness for Elements 174 within Content 162 | | |
|---|---|---|
| Element | Colour | Brightness (0=least bright; 100=brightest) |
| 174-1 | Black | 0 |
| 174-2 | Dark Blue | 25 |
| 174-3 | Light Red | 75 |
| 174-4 | White | 100 |

Each element 174 constitutes a portion of content 162. Each element 174 or portion of content has its own, and different, power dower drain characteristic on power supply 116. As As a specific example, element 174-4 has a first power drain characteristic whereby element 174-4 consumes more power than the other elements 174. It should be understood that other metrics or factors, in addition to, or in lieu of colour and brightness, can be used to characterize content.

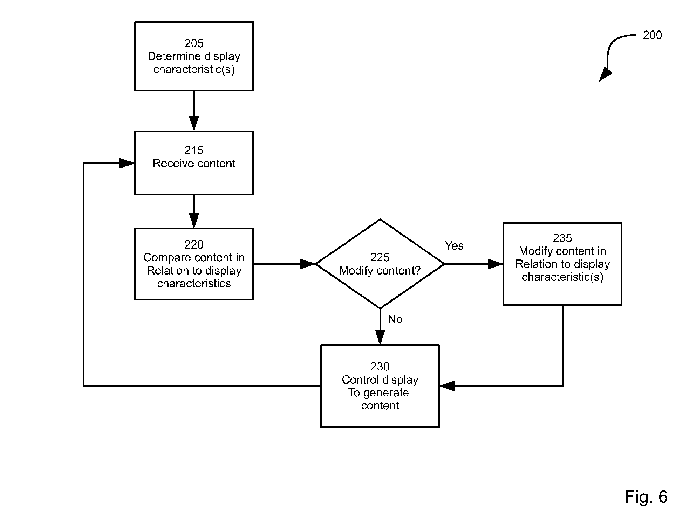

Referring now to Figure 6, a flowchart depicting a method for controlling a display according to display characteristics is indicated generally at 200. It is contemplated that method 200 can be implemented on device 50, but variations on method 200 and device 50 are contemplated. In a specific non-limiting implementation, it is contemplated that method 200 can be incorporated into content generation application 120 and transcoder 124 on device 50.

Block 205 comprises determining display characteristic(s). Block 205 can be performed by transcoder 124 sending an electronic query to processor 100 or display 58 to ascertain one or more characteristics of display 58. Alternatively, such characteristic(s) can be encoded into transcoder 124 at the time of manufacture of device 50. Such characteristic(s) can include, for example, whether display 58 comprises liquid crystals, plasma cells, or organic light emitting diodes (OLED). In a present example implementation, it is assumed that display 58 comprises an AMOLED, and accordingly, as part of block 205, such a characteristic is made available to transcoder 124. (Other characteristics can include, for example, a current rate of consumption of power from power supply 116 or a current level of power available to cause emission of light from control display 58. This will be discussed further below).

Block 215 comprises receiving content. Referring briefly back to Figure 4, block 215 can be effected by content generation application 120, in the form of a browser, retrieving content 162, in the form of a web page, from server 158.

Block 220 comprises comparing the content received at block 215 with the display characteristics from block 205. In one non-limiting implementation, as part of block 220, content received at block 215 is parsed into constituent elements. Assuming that content 162 is received at block 215, and using the example in relation to Table I, block 220 can comprise examining content 162 in order to obtain the contents of Table I.

Block 225 comprises determining whether to modify the content received at block 215 based on the comparison at block 220. The determination at block 225 can be based on a single criterion or a plurality of criteria. In a present non-limiting example, the criteria can comprise whether or not display 58 is an AMOLED display and whether or not there are any elements 174 that are white and have a brightness level of one-hundred. (In a variation, the determining can be based on a unique tag (e.g. an HTML tag) embedded into the content that identifies whether a particular element 174 has power drain characteristic that qualifies that element 174 for modification according to the method 200. In a still further variation, it will be understood that the criteria can comprise different colours, or combinations of colours, and different brightness levels. Other criteria will now occur to those skilled in the art.)

Assuming the determination is "no", then method 200 moves to block 230 at which point display 58 is controlled to generate content 162, in its unmodified form and as shown in Figure 5. However, consistent with the specific example being discussed, a "yes" determination will be made at block 220 because element 174-4 satisfies the criterion or criteria. On reaching a "yes" determination at block 225, method 200 moves to block 235, at which point the content received at block 225 is modified in accordance with the display characteristics.

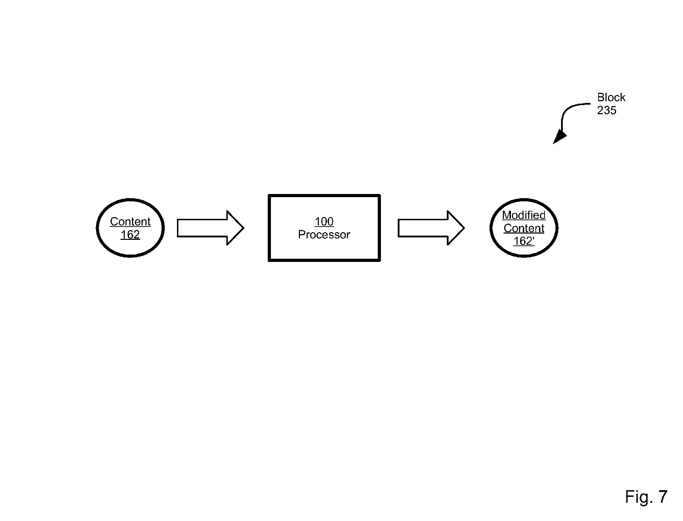

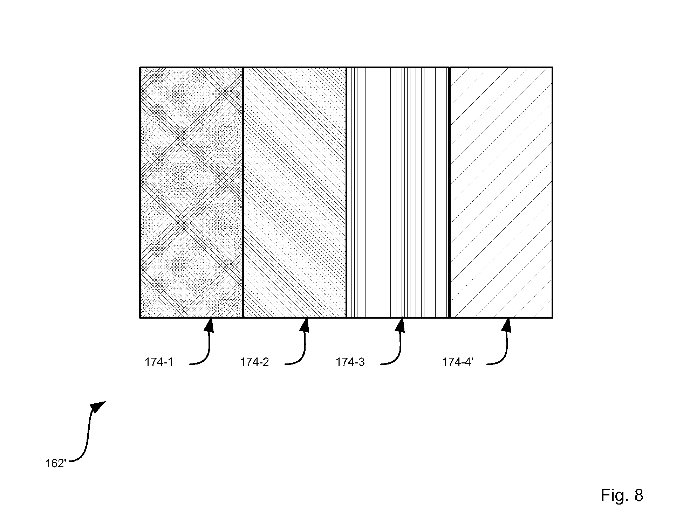

Exemplary performance of block 235 is represented in Figure 7, as processor 100 is shown as receiving content 162 and generating modified content 162'. Modified content 162' is shown in Figure 8. In a present example, the modification is performed in order to reduce power consumption by AMOLED display 58, and accordingly, elements 174 that have the colour white and a brightness of one-hundred are modified in order to have a different colour and a brightness level that is lower than one-hundred. The result is that element 174-4 is replaced with modified element 174-4', as shown in Figure 8, which has a colour of light gray and a brightness level of 85. (Expressed another way, block 235 comprises modifying at least a portion of content 162, (e.g. element 174-4) which has a first power drain characteristic, into a format (e.g. modified element 174-4') that has a second power drain characteristic that causes less drain on power supply 116 than the first power drain characteristic.) Table II shows the result of block 235, Table II being a modified version of Table I where element 174-1, element 174-2 and element 174-3 remain unmodified, but element 174-4 has been modified into element 174-4'.

**Table II**

| Colour and Brightness for Elements 174 within Content 162' | | |
|---|---|---|
| Element | Colour | Brightness (0=least bright; 100=brightest) |
| 174-1 | Black | 0 |
| 174-2 | Dark Blue | 25 |
| 174-3 | Light Red | 75 |
| 174-4' | Light Gray | 85 |

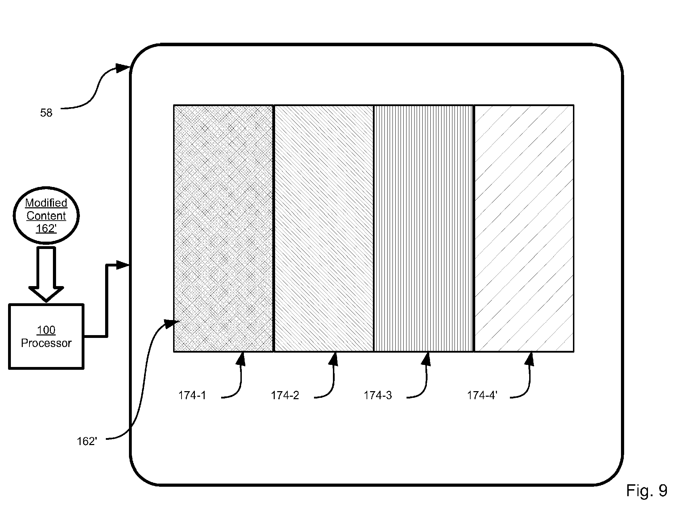

Block 230, as discussed above, comprises controlling the display to generate content. Where block 230 is reached directly from block 225 then content as received at block 215 is generated, and where block 230 is reached from block 235 then content is generated as modified at block 235. Figure 9 represents exemplary performance of block 230 when block 230 is reached from block 235 according to the specific example discussed above and in relation to Figure 8 and Table II. More specifically, modified content 162' is shown as being generated on display 58.

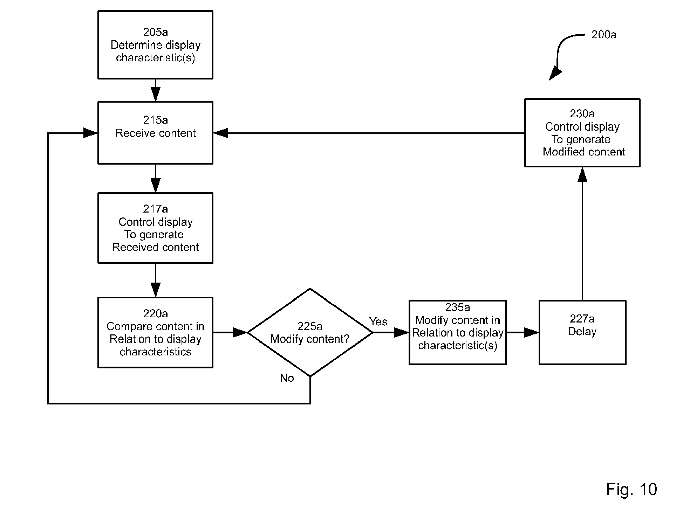

As shown in Figure 6, method 200 can return to block 215 from block 230, although other progressions from block 230 are contemplated, including the termination of method 200 altogether. Indeed, other variations to method 200 are contemplated, including changing the sequence in which various blocks are performed, or the addition of other blocks, such as that shown as method 200a in Figure 10. Method 200a is a variation on method 200 and so like blocks bear like references, except followed by the suffix "a". Thus, block 205a, block 215a, block 220a, block 225a, block 235a and block 230a in method 200a can be performed in substantially the same manner as their respective counterparts in method 200. However, method 200a also includes block 217a whereby the display is controlled to generate the received content even before any determination is made whether or not to modify the content. In the specific example above, at block 217a, display 58 is controlled to generate content 162 as shown in Figure 5 on display 58.

Furthermore, assuming a "yes" determination is made at block 225a (i.e. to modify the content received at block 215a) then a delay block 227a is also added whereby the unmodified content as generated at block 217a remains generated on display 217a for a period of time at least equivalent to the delay period established at block 227a, at which point block 230a is invoked and the modified content is generated.

The means by which the delay at block 217a is determined is not particularly limited. It can be based on, for example, a simple predefined time period, such that the unmodified content is generated for that time period prior to generation of the modified content. Where content is provided in the form of HTML, then the delay or duration of the time period can be determined by, for example, a unique tag (e.g. an HTML tag) embedded into the content that indicates the length of the delay. Furthermore, the delay 227a can also comprise a dissolve operation, whereby unmodified content 162 is gradually replaced with modified content 162'.

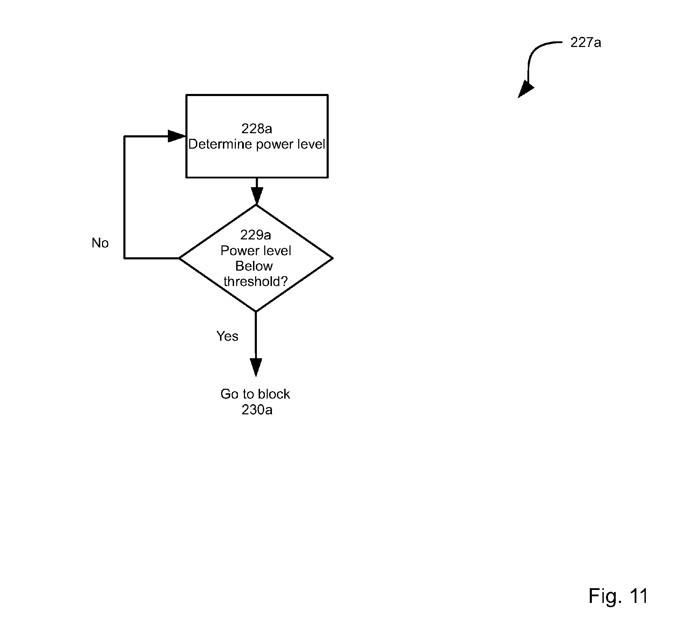

The delay at block 227a can also be based on an operation that considers the level of power within power supply 116, a non-limiting example of which is shown in Figure 11. For example, block 228a can comprise determining a level of power (e.g. expressed as voltage, or remaining milliamp hours before complete drain, or other power level metric) for power supply 116, and block 229a can comprise determining whether that power level is below a predefined threshold. A "no" determination at block 229a results in a return to block 228a. A "yes" at block 229a results in an advance to block 230a where modified content 162' is generated which consumes less power from power supply 116 than content 162.

It will now be noted that if another application on device 50 is invoked or some other input is provided via keyboard 62 or pointing device 64 that otherwise interrupts performance of method 200a, then block 230a may never be reached.

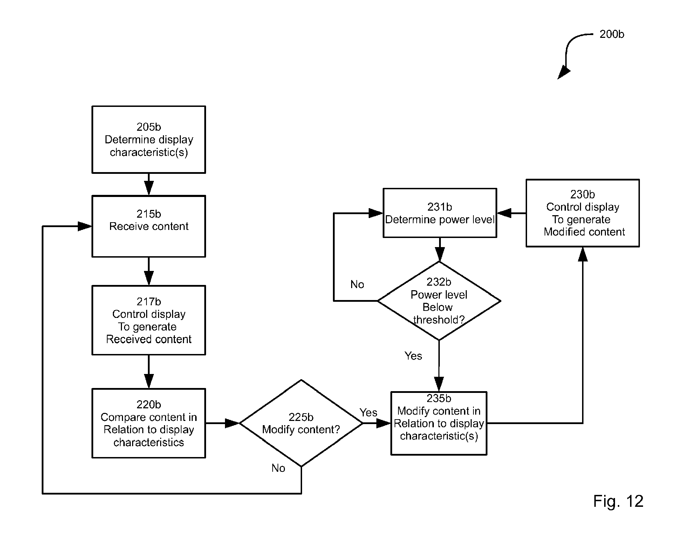

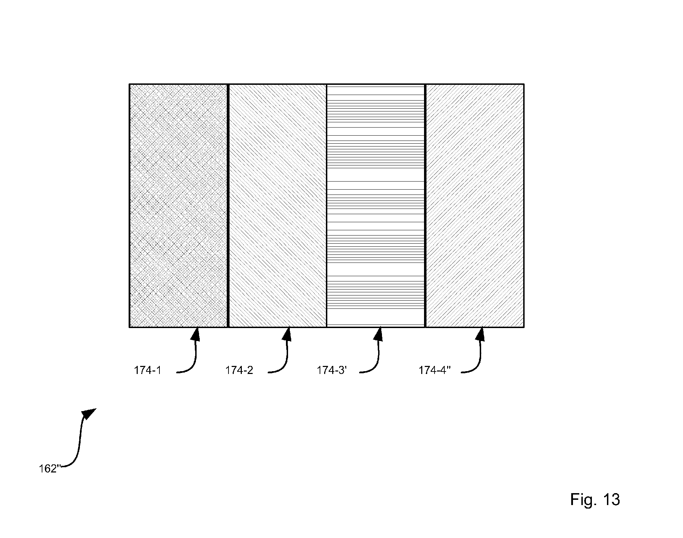

Another variation on method 200 is shown in Figure 12 as method 200b. Note that aspects of method 200, method 200a and method 200b and other aspects thereof can be combined as part of the contemplated variations herein. In method 200b, block 205b, block 215b, block 217b, block 220b, block 225b, block 230b are substantially the same as their counterparts in method 200a. Of note is that method 200b does not include delay block 227a, although delay block 227a can be included in method 200b. Also of note is that method 200b comprises block 231 b which comprises determining a level of power, and block 232b comprises determining if that level of power has fallen below a predefined threshold. Block 231 b and block 232b can be performed in substantially the same manner as block 228a and block 229a as discussed above, except the result of their performance is somewhat different. Of particular note in method 200b is that block 235b is configured to modify content based on changing levels of power as determined at block 231 b. For example, during successive performances of block 235b as block 235b is reached from block 232b, content 162 will be continually modified to consume less power from power supply 116. As a specific example, during an initial performance of block 235b, as reached from block 225b, the result of block 235b can be the generation of modified content 162' as shown in Figure 8. However, during a subsequent performance of block 235b as reached from block 232b, a further modified content 162" can be generated, as shown in Figure 13. Further modified content 162" thus comprises original element 174-1 and original element 174-2, but also comprises a modified element 174-3' as well as a further modified element 174-4". Table III shows the result of block 235b after such a second exemplary performance of block 235b, Table III being a modified version of Table II where element 174-1 and element 174-2 remain unmodified, but element 174-3 has been modified into element 174-3', and element 174-4' has been modified into element 174-4".

**Table III**

| Color and Brightness for Elements 174 within Further modified content 162" | | |
|---|---|---|
| Element | Color | Brightness (0=least bright; 100=brightest) |
| 174-1 | Black | 0 |
| 174-2 | Dark Blue | 25 |
| 174-3' | Red | 50 |
| 174-4" | Gray | 60 |

Such modified content 162" is then generated on display 50 at block 230b. Again, it will be noted that method 200b can be interrupted at any point by, for example, invocation of another application on device 50 or as a result of some other input is provided via keyboard 62 or pointing device 64 that otherwise interrupts performance of method 200b.

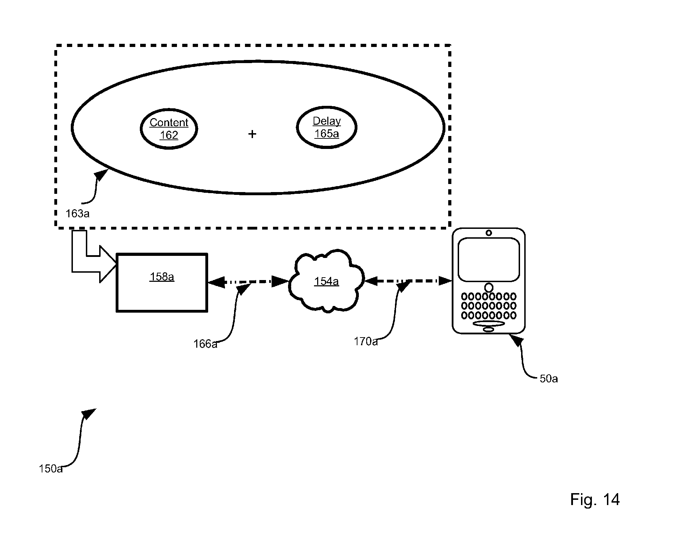

It should also be understood that method 200, method 200a and method 200b can be performed on variations of system 150 or on variations of components therein. Referring now to Figure 14, a modified version of system 150 is indicated generally at 150a. System 150a comprises substantially the same components as system 150, and accordingly like elements bear like references except followed by the suffix "a". Of note is that system 150a comprises content 163a instead of content 162. Content 163a is an enhanced version of content 162 which can assist device 50a and thereby reduce its processing burden. Various configurations of enhanced content are contemplated. As a simple example, content 163a comprises content 162 as well as a predefined time period 165a for the delay contemplated at block 227a in Figure 10 can be preconfigured within content 163a. Where content 163a is HTML, then the predefined time period 165a can be encoded into HTML. Where content 163a is not HTML, then the predefined time period 165a can be encoded in any other suitable manner.

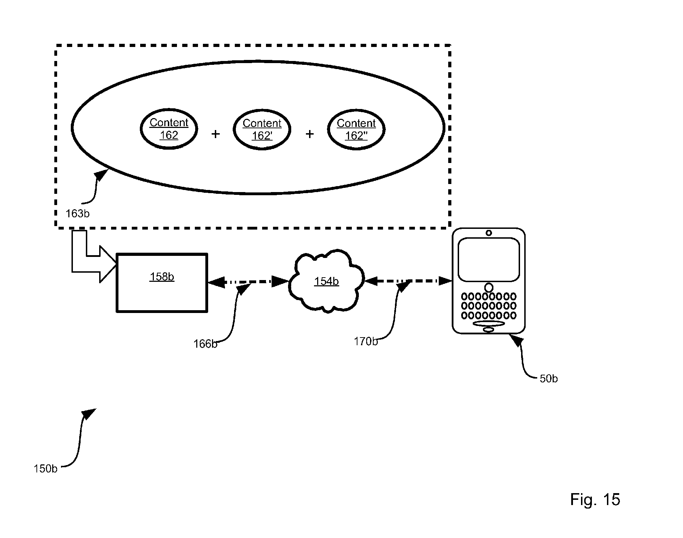

Referring now to Figure 15, another modified version of system 150 is indicated generally at 150b. System 150b comprises substantially the same components as system 150a, and accordingly like elements bear like references except followed by the suffix "b". Of note is that system 150b comprises content 163b instead of content 163a. Content 163b is an enhanced version of content 162 which can assist device 50a and thereby reduce its processing burden. Content 163b comprises content 162, content 162' and content 162". System 150b reduces or obviates the need for device 50b to actually transcode the content, and rather permits device 50b to simply download the appropriate version of content (i.e. content 162, content 162' or content 162" or combinations of them). Aspects of system 150b can be combined with aspects of system 150 or system 150a or either of them.

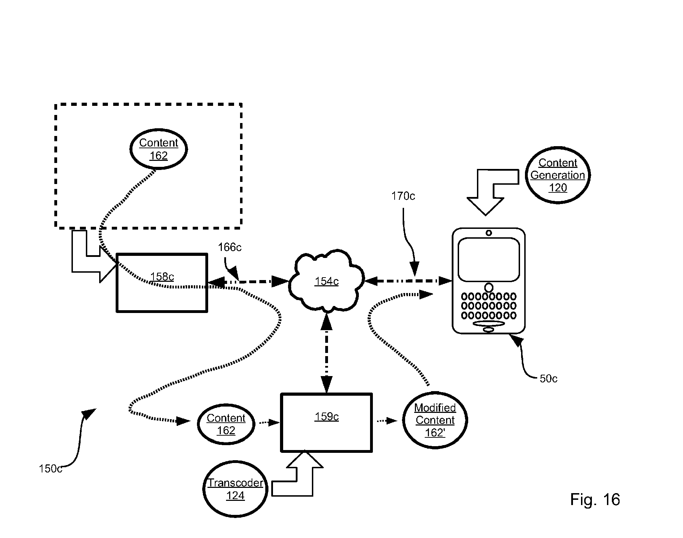

Referring now to Figure 16, another modified version of system 150 is indicated generally at 150c. System 150c comprises substantially the same components as system 150a, and accordingly like elements bear like references except followed by the suffix "c". Of note is that system 150c comprises server 158c hosting content 162 in an unenhanced form. Further, system 150c comprises an intermediation server 159c which hosts transcoder 124, and thereby obviating the need for inclusion of transcoder 124 on device 50c. When content 162 is delivered to device 50c, content 162 is intercepted and modified to generate modified content 162' and modified content 162' is sent to device 50c. System 150c also reduces or obviates the need for device 50c to actually transcode the content. Aspects of system 150c can of course be combined with aspects of system 150 or system 150a or system 150b or any of them. Those skilled in the art will now recognize that in system 150c block 205, block 215, block 220, block 225, block 235 are performed by intermediation server 159c, while block 230 is performed by device 50c. When method 200 is performed on system 150c, an extra block is included whereby unmodified content 162, or modified content 162' (whichever is appropriate as determined by block 225) is sent according to the circumstances, to device 50c. Block 205 can be performed in system 150c by a request to device 50c, or by server 159c maintaining a record indicating the display characteristics of device 50c. Aspects of system 150c can be combined with aspects of system 150 or system 150a or system 150b or any of them.

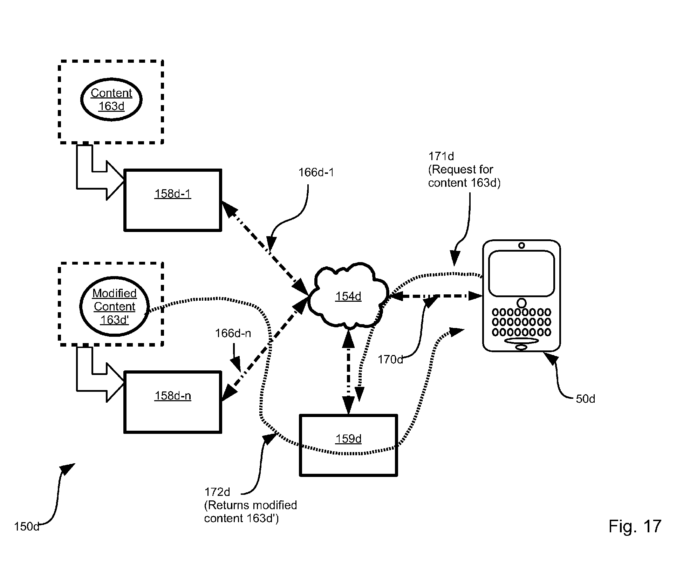

Referring now to Figure 17, another modified version of system 150 is indicated generally at 150c. System 150d comprises substantially the same components as system 150a, and accordingly like elements bear like references except followed by the suffix "d". Of note is that system 150d comprises a plurality of content servers 158d. Each content server 158d hosts, in substance, the same content 163d, except content server 158d-1 hosts unmodified content 163d, while content server 158d-n hosts modified content 163d'. Further, system 150d comprises an intermediation server 159c which intercepts a content request for content 163d from content server 158d-1 (indicated as request 171d) and, if appropriate according to determination similar to the determination at block 225 from method 200, fulfills request 171 d by retrieving modified content 163d' from server 158d-n in place of content 163d, and forwards modified content 163d' to device 50d. Aspects of system 150d can of course be combined with aspects of system 150 or system 150a or system 150b or system 150c or any of them. Those skilled in the art will now recognize that in system 150d block 205, block 215, block 220, block 225, block 235 are performed by intermediation server 159d, while block 230 is performed by device 50d. When method 200 is performed on system 150d, an extra block is included whereby unmodified content 163d, or modified content 163d' (whichever is appropriate as determined by block 225) is sent according to the circumstances, to device 50d. Block 205 can be performed in system 150d by a request to device 50d, or by server 159d maintaining a record indicating the display characteristics of device 50d. Aspects of system 150c can be combined with aspects of system 150 or system 150a or system 150b or any of them.

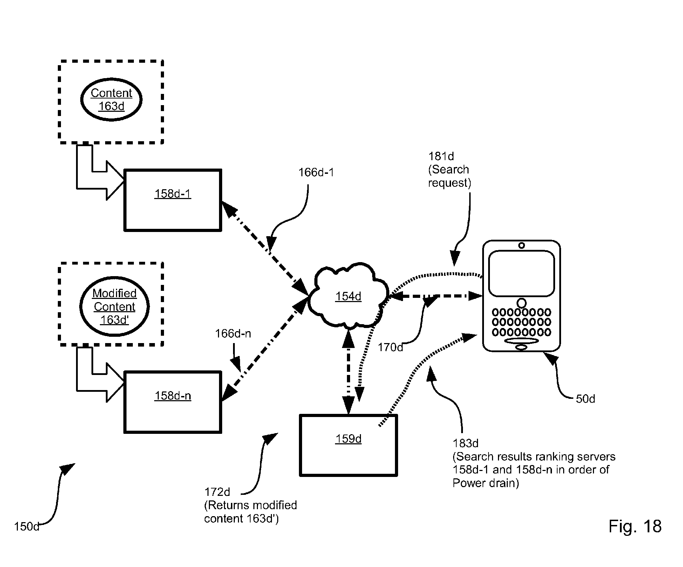

In another implementation of system 150d, shown in Figure 18, device 50d can be configured to perform a search request for content available on network 154d, indicated as search request 181 d in Figure 18. As a result of that search, server 159d can return a list of search results 183d that rank each result according to the amount of expected power drain that particular result would have on display 58. In this manner, modified content 163d' would be ranked more highly than content 163d on the search results generated on display 58d, thereby urging selection of modified content 163d' instead of content 163d.

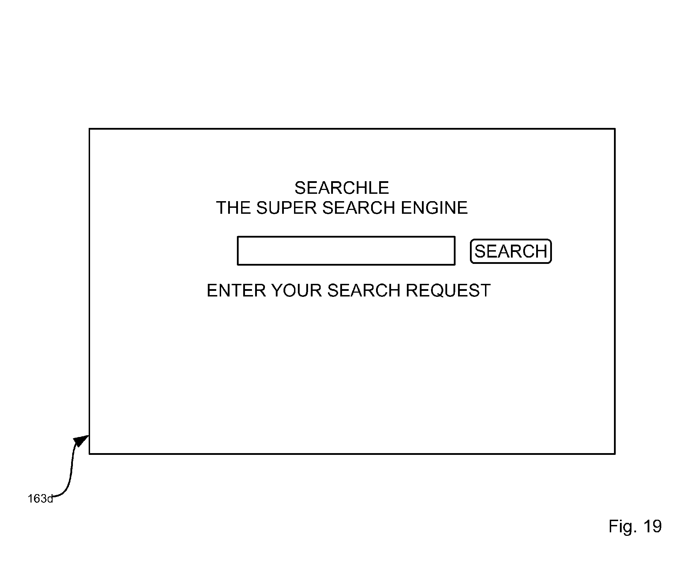

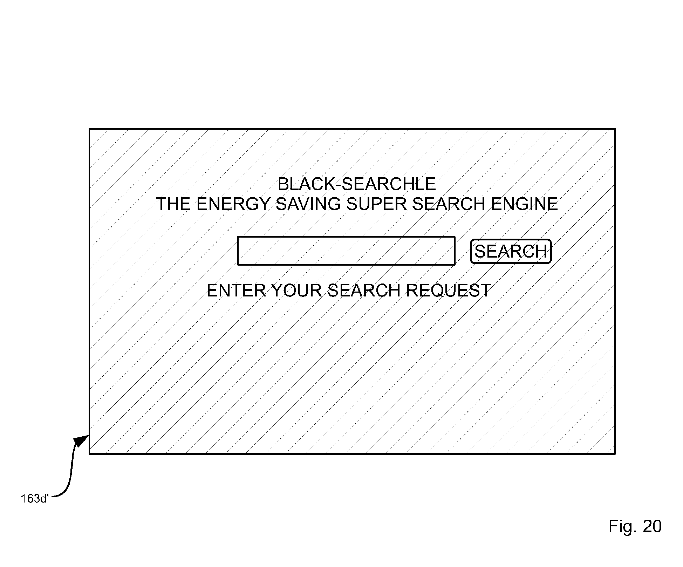

Again, the nature of content 163d and modified content 163d' are not particularly limited. Indeed, content 163d can correspond exactly to content 162, and modified content 163d' can correspond exactly to content 162' or content 162". As another non-limiting example, however, unmodified content 163d can appear as shown in Figure 19 which shows a search engine home screen which is predominantly white, and modified content 163d' can appear as shown in Figure 20 which shows a modified search engine home screen, that uses the same underlying search engine but is predominantly black rather than white, and thereby consumes less power from power supply 116. Those skilled in the art will now recognize that unmodified content 163d is roughly analogous to the Google™ home page of Google Inc., Mountain View California, while modified content 163d" is roughly analogous to the Blackle™ home page of Heap Media of Sydney Australia, which offers a Google custom search. A further variation is that content 163d may be analogous to a first search engine provider (e.g. Google™), while content 163d" may be analogous to a second search engine provider (e.g. Yahoo™), where the generation of the home screen for the second search engine provider is known to consume less power from power supply 116 than from the first search engine provider.

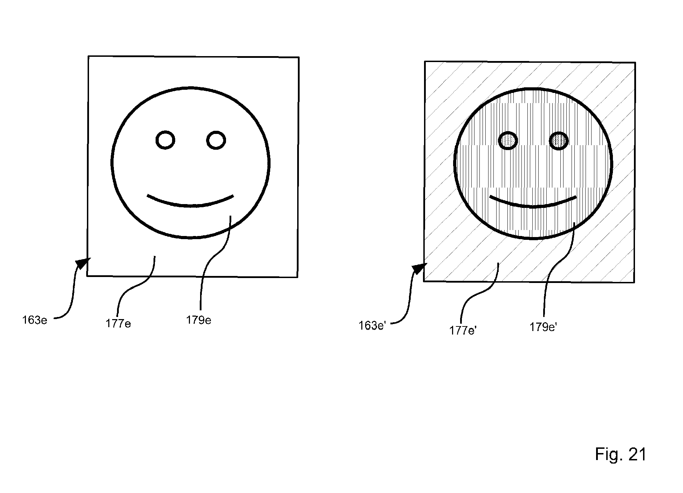

It is to be understood that, in addition to the specific examples given in relation to content 162, modified content 162', modified content 162", content 163d, and modified content 163d', the types of content modification contemplated are not particularly limited. Figure 21 shows another example of unmodified content 163e and an example of modified content 163e' that can be generated from unmodified content 163e. Unmodified content 163e comprises a white background 177e and a white graphic 179e. Modified content 163e' comprises a light grey background 177e' and a dark grey graphic 179e'. Also, while graphic 179e is shown as a simple icon, it is contemplated that graphics can encompass color photographs, or even color videos, where the brightness is reduced in a modified version of that content.

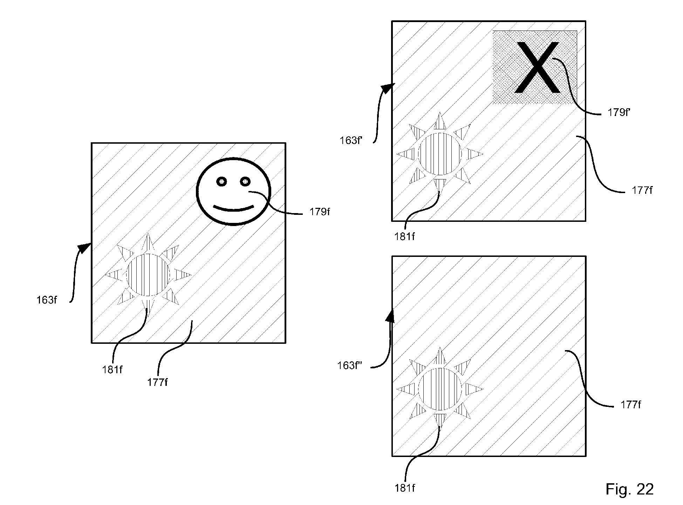

Figure 22 shows another example of unmodified content 163f and a first non-limiting example of modified content 163f' that can be generated from unmodified content 163f, and a non-limiting second example of modified content 163f" that can be generated from unmodified content 163f. Unmodified content 163e comprises a gray background 177f, a dark gray graphic 181f and a white graphic 179f. Modified content 163f' comprises also gray background 177f, dark gray graphic 181 f, and a modified graphic 179f', the modified graphic being in the form of an image place holder having a dark color. Modified content 163f" comprises also gray background 177f, dark gray graphic 181 f, but white graphic 179f is deleted altogether. While unmodified content 163f, modified content 163f', and modified content 163f" can be generated according to any of the foregoing, it is specifically contemplated that it can be desired to generate modified content 163f' or modified content 163f" using a method that incorporates delay block 227a or a variation thereof, so that initially, white graphic 179f is visible, before it is actually deleted.

It is also contemplated that content, such as content 162, or content 163f, can be embedded with indicators for element thereon. For example, in relation to content 163f, each graphic 181f and graphic 179f can be assigned an indicator that represents a relative importance of that graphic. (Of course such rankings of importance can also be applied to other types of content). For example, if white graphic 179f was given a higher importance indicator than dark gray graphic 181 f, then method 200 (or its variants) can be configured to modify dark gray graphic 181 f but not to modify white graphic 179f, notwithstanding the fact that white graphic 179f will result in a greater power drain on power supply 116. Where content is provided in the form of HTML, such indicators can be implemented by, for example, unique HTML tags that are embedded into the content.

While the foregoing provides certain non-limiting exemplary implementations, it is to be understood that combinations, subsets, and variations of the foregoing are contemplated. The monopoly sought is defined by the claims.

## Claims

1. A method comprising:
detecting presence of an active-matrix organic light-emitting diode display in a handheld mobile device;
receiving content for generation on the display;
determining a portion of the content having a first power drain characteristic;
generating modified content by modifying the portion into a format that has a second power drain characteristic; the second power drain characteristic causing less drain on a power supply than the first power drain characteristic; and
controlling the display to generate the modified content.

2. The method of claim 1 wherein the first power drain characteristic results from the portion comprising a light color.

3. The method of claim 2 wherein the second power drain characteristic results from the portion comprising a color that is darker than the light color.

4. The method of claim 1 wherein generating the modified content comprises deleting the portion of the content.

5. The method of claim 1 further comprising waiting a predetermined time period before generating the modified content.

6. The method of claim 5 wherein the predetermined time period is based on a unique tag embedded into the content that indicates a duration of the predetermined time period and the portion associated with the duration of the predefined time period.

7. The method of any one of claims 1-6 wherein the content is HTML.

8. The method of claim 1 wherein the first power drain characteristic is identified by a unique tag embedded into the content.

9. The method of any one of claims 1-8 wherein the generating the modified content is based on a determination of an importance of various portions of the content in relation to other portions of the content.

10. The method of claim 9 wherein the importance is determined based on unique tags embedded into the content respective to each of the various portions of the content.

11. The method of any one of claims 1-10 wherein the content comprises one of a graphic image, text, a photograph, or a video.

12. The method of any one of claims 1-11 wherein the content is stored in a memory of said handheld mobile device.

13. The method of any one of claims 1-12 further comprising:
determining a portion of the content that requires power above a threshold amount of power; and
modifying the portion of the graphic image that requires power above the threshold amount of power to require power below the threshold amount of power.

14. An electronic device comprising:
a display; a processor connected to said display and configured to control said display; storage connected to said processor and configured to store content; said processor configured to according to the method according to claims 1-13.

15. A server having a processor configured to perform one or more of the detecting, determining and modifying according to any one of claims 1-13 and in communication with an electronic device configured to perform a remainder of the method of claims 1-13.

## Amended claims

### Amended claims in accordance with Rule 137(2) EPC.

**1.** A method of a handheld mobile device (50) comprising an active-matrix organic light-emitting diode display (58), the method comprising:
receiving (215, 215a, 215b) content for generation on the active-matrix organic light-emitting diode display (58);
determining a portion of the content having a first power drain characteristic;
generating (235, 235a, 235b) modified content by modifying the portion into a format that has a second power drain characteristic; the second power drain characteristic causing less drain on a power supply than the first power drain characteristic; and
controlling (230, 230a, 230b) the active-matrix organic light-emitting diode display (58) to generate the modified content,
wherein the generating the modified content is based on a determination of an importance of various portions of the content in relation to other portions of the content, the importance is determined based on unique tags embedded into the content respective to each of the various portions of the content.

**2.** The method of claim 1 wherein the second power drain characteristic results from the portion comprising a color that is darker than a color of the portion of the content having a first power drain characteristic.

**3.** The method of claim 1 wherein generating the modified content comprises deleting the portion of the content.

**4.** The method of claim 1 further comprising waiting a predetermined time period before generating the modified content.

**5.** The method of claim 4 wherein the predetermined time period is based on a unique tag embedded into the content that indicates a duration of the predetermined time period and the portion associated with the duration of the predefined time period.

**6.** The method of any one of claims 1-5 wherein the content is HTML.

**7.** The method of claim 1 wherein the first power drain characteristic is identified by a unique tag embedded into the content.

**8.** The method of any one of claims 1-7 wherein the content comprises one of a graphic image, text, a photograph, or a video.

**9.** The method of any one of claims 1-8 wherein the content is stored in a memory of said handheld mobile device (50).

**10.** The method of any one of claims 8-9 further comprising:
determining (232b) a portion of the content that requires power above a threshold amount of power; and
modifying (235b) the portion of the graphic image that requires power above the threshold amount of power to require power below the threshold amount of power.

**11.** An electronic device (50) comprising:
a display (58); a processor (100) connected to said display (58) and configured to control said display (58); storage (104, 108) connected to said processor (100) and configured to store content; said processor configured to perform the method of of any one of claims 1-10.

**12.** A server (158) having a processor configured to perform one or more of the determining and modifying according to any one of claims 1-10 and in communication with an electronic device (50) configured to perform the steps of the method of claims 1-10 that are not performed by the server (158).

**13.** A non-volatile storage unit (104) comprising programming instructions that when executed by a processor (100) of a handheld mobile device (50) cause the handheld device (50) to perform the method of any one of claims 1-10.
